# EUROPÄISCHE PATENTSCHRIFT

(11) **EP 2 795 767 B1**
(45) Veröffentlichungstag und Bekanntmachung des Hinweises auf die Patenterteilung: **17.07.2019**
(21) Anmeldenummer: 12810293.6
(22) Anmeldetag: 21.12.2012
(51) Int. Cl.: H02K 3/51, H02K 17/22

(54) **ROTIERENDE ELEKTRISCHE MASCHINE, INSBESONDERE DOPPELT GESPEISTE ASYNCHRONMASCHINE IM LEISTUNGSBEREICH ZWISCHEN 20 MVA UND 500 MVA**
ROTATING ELECTRIC MACHINE, IN PARTICULAR DOUBLY-FED INDUCTION MACHINE IN THE POWER RANGE BETWEEN 20 MVA AND 500 MVA
MACHINE ÉLECTRIQUE ROTATIVE, EN PARTICULIER MACHINE ASYNCHRONE À DOUBLE ALIMENTATION DANS LA PLAGE DE PUISSANCE ENTRE 20 MVA ET 500 MVA

(30) Priorität: 22.12.2011 CH 20262011
(43) Veröffentlichungstag der Anmeldung: 29.10.2014
(73) Patentinhaber: GE Renewable Technologies, 38100 Grenoble (FR)
(72) Erfinder: OKAI, Ricardo Naoki, CH-5442 Fislisbach (CH); SCHWERY, Alexander, CH-5024 Küttigen (CH); WALSER, Hanspeter, CH-4712 Laupersdorf (CH)
(86) Internationale Anmeldenummer: PCT/EP2012/076633
(87) Internationale Veröffentlichungsnummer: WO 2013/093000

(56) Entgegenhaltungen:
- EP-A2- 0 736 953
- DE-A1-102009 037 989
- DE-C1- 19 519 127
- GB-A- 191 014 680

## Beschreibung

### TECHNISCHES GEBIET

Die vorliegende Erfindung bezieht sich auf das Gebiet der Erzeugung elektrischer Energie Sie betrifft eine rotierende elektrische Maschine, insbesondere doppelt gespeiste Asynchronmaschine im Leistungsbereich zwischen 20 MVA und 500 MVA, gemäss dem Oberbegriff des Anspruchs 1.

### STAND DER TECHNIK

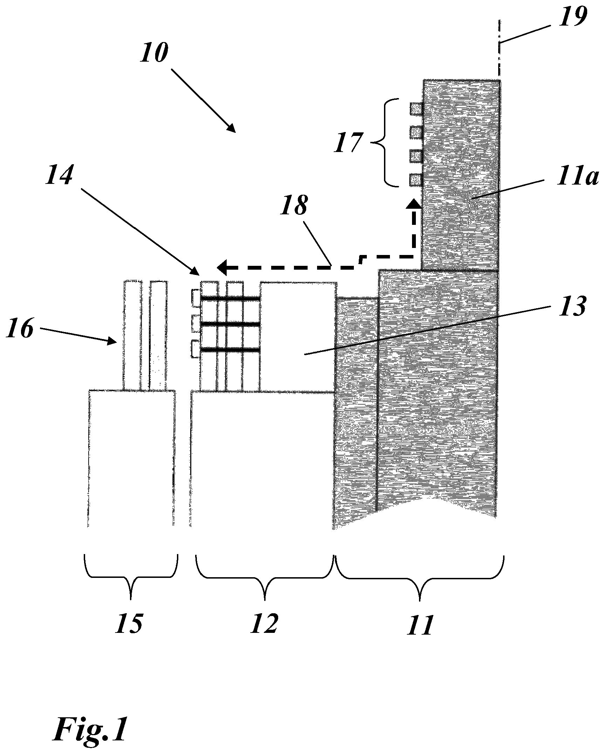

Doppelt gespeiste Asynchronmaschinen im Leistungsbereich von 20 MVA bis 500 MVA können zur drehzahlvariabeln Energieproduktion eingesetzt werden. Diese Maschinen zeichnen sich durch eine verteilte Dreiphasenwicklung auf dem Rotor aus. Die Rotorwicklung besteht aus einzelnen Stäben, welche im Rotorblechpaket in Nuten eingebettet sind. Im Wickelkopf werden die Stäbe zu einer Wicklung verschaltet. Die Einspeisung der Ströme erfolgt über mindestens drei Schleifringe, welche am Ende der Maschine an der Rotorwelle befestigt sind. Ein Ausschnitt aus einer solchen Maschine ist in Fig. 1 in stark vereinfachter Form wiedergegeben. Die in Fig. 1 dargestellte Asynchronmaschine 10 hat eine Maschinenachse 19. Um diese Achse 19 drehbar ist ein Zentralkörper 11 mit einer Welle 11a, auf der die Schleifringe 17 angeordnet sind. Um den Zentralkörper 11 herum ist der Rotorblechkörper 12 angeordnet, an den unterhalb eines Wickelkopfes 14 der Rotorwicklung ein Hilfsrim 13 anschliesst. Der Rotorblechkörper 12 ist von einem Statorblechkörper 15 konzentrisch umgeben, in dem eine Statorwicklung untergebracht ist, die am Ende des Körpers 15 mit einem Statorwickelkopf 16 nach aussen vorsteht. Die GB 14680 A beschreibt eine Befestigungsvorrichtung zum Befestigen von Windungsenden des Rotors. Bolzen befestigen die Windungsenden um diese radial gegen Zentrifugalkräfte zu sichern. Die EP 0736953 A2 beschreibt einen Rotor mit Stützring zum Stützen der Windungsenden gegen Fliehkräfte und drei Arten von Zugbolzen. Weiterer Stand der Technik ist DE102009037989.

Die drei Phasen der Rotorwicklung müssen mit den Schleifringen 17 am Ende der Welle 11a verbunden werden. Dazu sind in der Welle 11a (nicht dargestellte) Leiter untergebracht, welche einerseits mit den Schleifringen 17 und andererseits auf der Höhe der Wickelkopfenden mit den Wickelköpfen 14 verbunden sind. Die rechtwinklig zur Welle verlaufenden Verbinder 18 (in Fig. 1 gestrichelt angedeutet) müssen für die Rotorprüfspannung isoliert sein. Die Verbinder 18 tragen den Rotornennstrom und dürfen dabei die geforderte Grenztemperatur nicht überschreiten. Das System der Verbinder 18 muss in axialer Richtung (am Anschlusspunkt der Wicklung) und in radialer Richtung flexibel genug sein, um die thermische Ausdehnung der Wicklung in axialer und die Ausdehnung des Rotorkörpers in radialer Richtung aufnehmen zu können. Schliesslich müssen die Verbinder 18 gegen die hohen Zentrifugalkräfte gesichert werden.

### DARSTELLUNG DER ERFINDUNG

Es ist daher eine Aufgabe der Erfindung, eine rotierende elektrische Maschine der eingangs genannten Art zu schaffen, welche den oben genannten Ansprüchen genügt.

Die Aufgabe wird erfindungsgemäß durch eine rotierende elektrische Maschine der in Anspruch 1 genannten Art gelöst. Weitere Ausgestaltungsformen der Erfindung sind in den abhängigen Ansprüchen 2 - 13 definiert.

Eine Ausgestaltung der erfindungsgemässen Maschine ist dadurch gekennzeichnet, dass die mechanischen Verbinder über Wickelkopfanschlüsse mit dem Rotorwickelkopf der Rotorwicklung verbunden sind, und dass sie sich am Hilfsrim über ein erweitertes Hilfsrim abstützen, welches das Hilfsrim in axialer Richtung erweitert, vorzugsweise aus verschichteten Blechen besteht und einen geschlossenen Ring bildet.

Eine andere Ausgestaltung zeichnet sich dadurch aus, dass sich die mechanischen Verbinder auf derselben axialen Höhe befinden wie die Wickelkopfanschlüsse. Hierdurch werden Biegespannungen in den Verbindern sicher vermieden.

Eine weitere Ausgestaltung der Erfindung ist dadurch gekennzeichnet, dass die mechanischen Verbinder das erweiterte Hilfsrim, welches über Bolzen mit dem Hilfsrim verbunden ist, in radialer Richtung durchqueren, um Biegespannungen in den mechanischen Verbindern zu vermeiden.

Gemäss einen anderen Ausgestaltung bestehen die mechanischen Verbinder aus einem elektrisch leitenden, mechanisch hoch belastbaren Material, insbesondere aus einem Stahl.

Insbesondere können die mechanischen Verbinder auch elektrisch mit dem Rotorwickelkopf bzw. den Wickelkopfanschlüssen verbunden sein.

Besonders vorteilhaft ist es, wenn die mechanischen Verbinder dabei durch eine sie umgebende Isolation elektrisch isoliert sind, und wenn die Zentrifugalkräfte, welche die mechanischen Verbinder aufnehmen, über rechtwinklig angeordnete Enden der Verbinder und über an der Innenseite des Hilfsrims bzw. des erweiterten Hilfsrims angeordnete Isolationsblöcke auf das Hilfsrim bzw. erweiterte Hilfsrim übertragen werden.

Erfindungsgemäß sind für die eigentliche Stromübertragung zusätzliche elektrische Verbinder vorgesehen, welche elektrisch parallel zu den mechanischen Verbindern geschaltet sind. Vorzugsweise verlaufen die elektrischen Verbinder zur besseren Kühlung ausserhalb des Hilfsrims bzw. erweiterten Hilfsrims.

Insbesondere können die elektrischen Verbinder aus mechanisch weniger belastbaren, aber elektrisch gut leitenden Materialien, insbesondere Kupfer, bestehen.

Eine weitere Ausgestaltung zeichnet sich dadurch aus, dass die elektrischen Verbinder auf der Innenseite rechtwinklig abgebogen sind, um die auftretenden Zentrifugalkräfte über Isolationsblöcke auf die Innenseite des Hilfsrims bzw. erweiterten Hilfsrims zu übertragen, und dass die elektrischen Verbinder in axialer Richtung durch aussen liegende Abschlussplatten gesichert sind.

Erfindungsgemäß sind die elektrischen und mechanischen Verbinder durch Verbinderanschlüsse elektrisch verbunden und die Verbinderanschlüsse sind elektrisch mit flexiblen Übergangsstücken verbunden, welche den Kontakt zu an der Welle angeordneten Wellenzuleitern herstellen.

Vorzugsweise sind die flexiblen Übergangsstücke U-förmig ausgebildet.

Die flexiblen Übergangsstücke können aber auch aus einzelnen Lamellen aufgebaut sein.

Auch die Übergangsstücke können aus einem mechanisch nicht stark belastbaren, aber elektrisch gut leitendem Material, insbesondere Kupfer, bestehen.

Gemäss einer anderen Ausgestaltung der Erfindung werden zur Vermeidung einer Unwucht am Rotor am Umfang Verbinder vorgesehen, welche weder eine mechanische noch eine elektrische Funktion haben.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: einen Ausschnitt aus einer Asynchronmaschine in stark vereinfachter Form;
- Fig. 2: in einem Längschnitt die parallele Anordnung von mechanischen und elektrischen Verbindern gemäss einem Ausführungsbeispiel der Erfindung; und
- Fig. 3: die Draufsicht in axialer Richtung auf eine Anordnung gemäss Fig. 2.

### WEGE ZUR AUSFÜHRUNG DER ERFINDUNG

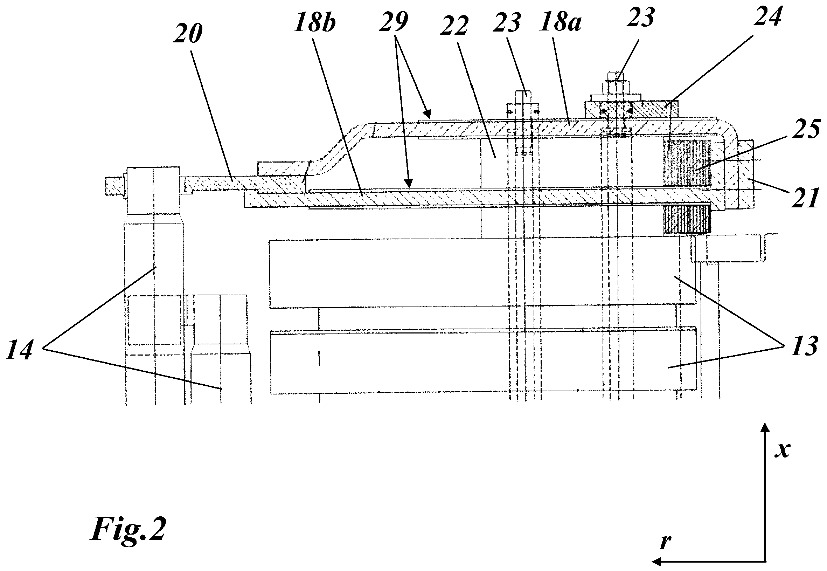

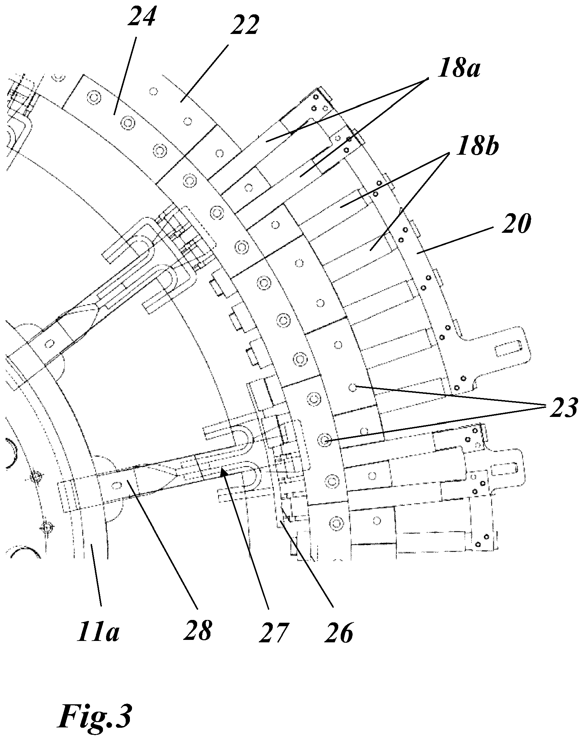

In den Fig. 2 und 3 sind die Hauptbestandteile von Rotorzuleitern bzw. Verbindern 18 gemäss einem Ausführungsbeispiel der Erfindung dargestellt. Der Strom wird von den Schleifringen 17 durch die Welle 11a über Wellenzuleiter 28 zu Verbinderanschlüssen 26 geführt. Die eigentlichen Verbinder 18a, 18b stellen den elektrischen Kontakt zwischen den Verbinderanschlüssen 26 und den Wickelkopfanschlüssen 20 her, welche schliesslich mit der Rotorwicklung (Rotorwickelkopf 14) verbunden sind. Im Weiteren wird auf die Funktion der einzelnen Teile eingegangen.

Die Wickelkopfanschlüsse 20 stellen den Kontakt zwischen den Verbindern 18a, 18b und den zugehörigen Anschlussstäben der Rotorwicklung her; dabei können sie mit mehreren am Umfang verteilten Verbindern 18a, 18b verbunden sein. Sie müssen zusammen mit den Verbindern 18a, 18b flexibel genug ausgeführt sein, damit sie die axiale thermische Ausdehnung (Richtung x in Fig. 2) der Wicklung aufnehmen können.

Die Verbinder 18a, 18b stellen das eigentliche Herzstück der vorliegenden Erfindung dar. Fig. 2 zeigt die prinzipielle Unterteilung in elektrische Verbinder 18a und mechanische Verbinder 18b. Aufgabe der mechanischen Verbinder 18b ist es, die durch die Zentrifugalbeschleunigung auftretenden Kräfte der Wickelkopfanschlüsse 20 aufzunehmen und an das Hilfsrim 13 weiterzugeben. Zu diesem Zweck wird das Hilfsrim 13 in axialer Richtung durch ein erweitertes Hilfsrim 22 verlängert. Die mechanischen Verbinder 18b durchqueren in radialer Richtung (Richtung r in Fig. 2) das erweiterte Hilfsrim 22, welches aus verschichteten Blechen besteht und somit einen geschlossenen Ring bildet, welcher über Bolzen 23 mit dem Hilfsrim 13 verbunden ist. Um Biegespannungen in den Verbindern 18a, 18b zu vermeiden, befinden sich die mechanischen Verbinder 18b vorzugsweise auf derselben axialen Höhe wie die Wickelkopfanschlüsse 20.

Die mechanischen Verbinder 18b bestehen aus mechanisch hoch belastbarem Material, welches bei Bedarf auch als elektrischer Leiter genutzt werden kann, wie zum Beispiel Stahl. Die mechanischen Verbinder 18b sind auch elektrisch mit den Wickelkopfanschlüssen 20 verbunden und tragen damit auch zur Stromübertragung bei. Sind die mechanischen Verbinder 18b in direktem Kontakt mit den elektrischen Verbindern 18a, müssen sie dementsprechend isoliert sein. Dazu dient gemäss Fig. 2 einerseits eine Isolation 29, welche die Verbinder 18a, 18b direkt umgibt, und andererseits ein Isolationsblock 25, welcher sich am inneren Umfang des erweiterten Hilfsrims 22 befindet. Die Zentrifugalkräfte, welche die mechanischen Verbinder 18b aufnehmen, werden von diesen auf das erweiterte Hilfsrim 22 übertragen. Die Kraftübertragung geschieht über die rechtwinklig angeordneten Enden der Verbinder 18a, 18b weiter auf die Isolationsblöcke 25 und damit auf die Innenseite des erweiterten Hilfsrims 22.

Durch diese Vorgehensweise werden grosse zusätzliche radiale Kräfte auf die Pressbolzen 23 vermieden, welche entstehen würden, wenn die Verbinder 18a, 18b über Scherung direkt mit den Bolzen 23 verbunden wären. Entsprechend der notwendigen tangentialen Länge der Wickelkopfanschlüsse 20 werden diese von einem oder mehreren mechanischen Verbindern 18b getragen. Damit auf dem Rotor durch das Gewicht der Verbinder 18a, 18b keine Unwucht auftritt, können am Umfang verteilt auch "Leerverbinder" vorgesehen werden, welche weder eine mechanische noch eine elektrische Funktion haben.

Müssen nur kleine Ströme übertragen werden, kann dies allein über die oben beschriebenen mechanischen Verbinder 18b geschehen. Bei grossen Strömen und den damit verbundenen Verlusten würden die mechanischen Verbinder 18b aber überhitzt. Aus diesem Grund sind für die eigentliche Stromübertragung elektrische Verbinder 18a vorgesehen. Diese sind elektrisch parallel zu den mechanischen Verbindern 18b geschaltet, die auch zur Stromübertragung beitragen. Die elektrischen Verbinder 18a verlaufen ausserhalb des erweiterten Hilfsrims 22 (Fig. 2) und sind somit gut gekühlt. Durch die Rotation treten auch an diesen Verbindern 18a mechanische Kräfte auf. Im Gegensatz zu den mechanischen Verbindern 18b müssen die elektrischen Verbinder 18a aber keine zusätzlichen Kräfte aufnehmen und können demzufolge im Vergleich zu den mechanischen Verbindern 18b aus mechanisch weniger belastbaren, aber gut leitenden Materialien, wie zum Beispiel Kupfer bestehen. Die elektrischen Verbinder 18a sind auf der Innenseite rechtwinklig abgebogen, um die auftretenden Zentrifugalkräfte über die Isolationsblöcke 25 auf die Innenseite des erweiterten Hilfsrims 22 zu übertragen. In axialer Richtung sind die elektrischen Verbinder 18a durch aussen liegende Abschlussplatten 24 gesichert.

Auf der Innenseite des erweiterten Hilfsrims 22 werden die Verbinder 18a, 18b mit Hilfe der Verbinderanschlüsse 26 (Fig. 3) elektrisch verbunden. Die in den Verbinderanschlüssen 26 entstehenden Zentrifugalkräfte werden vom erweiterten Hilfsrim 22 übernommen. Dazu werden diese über weitere Isolationsblöcke radial abgestützt. Die Verbinderanschlüsse 26 sind elektrisch mit flexiblen Übergangsstücken 27 verbunden, welche den Kontakt zu speziellen Wellenzuleitern 28 herstellen.

Die Wellenzuleiter 28 sind mit (nicht dargestellten) Leitern in der Welle 11a verbunden und fix auf die Arme des Rotorsterns der Asynchronmaschine montiert. Da sich der geschichtete Rotorblechkörper 12 im Betrieb ausdehnen kann, bedarf es einer in radialer Richtung flexiblen Verbindung zwischen den Wellenzuleitern 28 und den Verbindern 18a, 18b. Diese Aufgabe wird von den flexiblen Übergangsstücken 27 übernommen. Dazu können diese, wie Fig. 3 aufgezeigt, U-förmig gebaut werden. Im Bedarfsfall können die flexiblen Übergangsstücke 27 auch aus einzelnen Lamellen aufgebaut sein, um zusätzliche Flexibilität zu erreichen. Mechanisch sind die Übergangsstücke 27 nicht stark belastet, da die Wellenzuleiter 28 von den Rotorsternarmen, und die Verbinderanschlüsse 26 vom erweiterten Hilfsrim 22 getragen werden. Sie können demzufolge aus mechanisch nicht stark belastbarem, aber gut leitendem Material, wie zum Beispiel Kupfer bestehen.

### BEZUGSZEICHENLISTE

- 10: Asynchronmaschine
- 11: Zentral körper
- 11a: Welle
- 12: Rotorblechkörper
- 13: Hilfsrim
- 14: Rotorwickelkopf
- 15: Statorblechkörper
- 16: Statorwickelkopf
- 17: Schleifring
- 18: Rotorzuleiter (Verbinder)
- 18a: elektrischer Verbinder
- 18b: mechanischer Verbinder
- 19: Maschinenachse
- 20: Wickelkopfanschluss
- 21: Ableitung (zu den Schleifringen)
- 22: erweitertes Hilfsrim
- 23: Bolzen
- 24: Abschlussplatte
- 25: Isolationsblock
- 26: Verbinderanschluss
- 27: Übergangsstück (flexibel)
- 28: Wellenzuleiter
- 29: Isolation

## Patentansprüche

1. Rotierende elektrische Maschine, insbesondere doppelt gespeiste Asynchronmaschine (10) im Leistungsbereich zwischen 20 MVA und 500 MVA, welche einen um eine Maschinenachse (19) drehenden, von einem Stator (15, 16) konzentrisch umgebenen Rotor (11, 11a, 12, 14) mit einem Rotorblechkörper (12) und einer Welle (11a) umfasst, welcher Rotorblechkörper (12) eine weiter aussen angeordnete Rotorwicklung trägt, die über Verbinder (18) mit weiter innen am Ende der Welle (11a) angeordneten Schleifringen (17) verbunden ist, wobei die Verbinder (18) zur Aufnahme von durch die Zentrifugalbeschleunigung auftretenden Kräften rechtwinklig zur Welle (11a) verlaufende mechanische Verbinder (18b) aufweisen, welche einerseits mit einem Rotorwickelkopf (14) der Rotorwicklung verbunden sind und sich andererseits an einem Hilfsrim (13, 22) am Rotorblechkörper (12) abstützen,
**dadurch gekennzeichnet, dass** für die eigentliche Stromübertragung zusätzliche elektrische Verbinder (18a) vorgesehen sind, welche elektrisch parallel zu den mechanischen Verbindern (18b) geschaltet sind, wobei die elektrischen und mechanischen Verbinder (18a, 18b) durch Verbinderanschlüsse (26) elektrisch verbunden sind, und dass die Verbinderanschlüsse (26) elektrisch mit flexiblen Übergangsstücken (27) verbunden sind, welche den Kontakt zu an der Welle (11a) angeordneten Wellenzuleitern (28) herstellen, so dass Strom von den Schleifringen (17) durch die Welle (11a) über die Wellenzuleiter (28) zu den Verbinderanschlüssen (26) geführt wird.

2. Rotierende elektrische Maschine nach Anspruch 1, **dadurch gekennzeichnet, dass** die mechanischen Verbinder (18b) über Wickelkopfanschlüsse (20) mit dem Rotorwickelkopf (14) der Rotorwicklung verbunden sind, und dass sie sich am Hilfsrim (13) über ein erweitertes Hilfsrim (22) abstützen, welches das Hilfsrim (13) in axialer Richtung erweitert, vorzugsweise aus verschichteten Blechen besteht und einen geschlossenen Ring bildet.

3. Rotierende elektrische Maschine nach Anspruch 1 oder 2, **dadurch gekennzeichnet, dass** sich die mechanischen Verbinder (18b) auf derselben axialen Höhe befinden, wie die Wickelkopfanschlüsse (20).

4. Rotierende elektrische Maschine nach Anspruch 2, **dadurch gekennzeichnet, dass** die mechanischen Verbinder (18b) das erweiterte Hilfsrim (22), welches über Bolzen (23) mit dem Hilfsrim (13) verbunden ist, in radialer Richtung durchqueren, um Biegespannungen in den mechanischen Verbindern (18b) zu vermeiden.

5. Rotierende elektrische Maschine nach einem der Ansprüche 1 bis 4, **dadurch gekennzeichnet, dass** die mechanischen Verbinder (18b) aus einem elektrisch leitenden, mechanisch hoch belastbaren Material, insbesondere aus einem Stahl, bestehen.

6. Rotierende elektrische Maschine nach Anspruch 5, **dadurch gekennzeichnet, dass** die mechanischen Verbinder (18b) auch elektrisch mit dem Rotorwickelkopf (14) bzw. den Wickelkopfanschlüssen (20) verbunden sind.

7. Rotierende elektrische Maschine nach Anspruch 6, **dadurch gekennzeichnet, dass** die mechanischen Verbinder (18b) durch eine sie umgebende Isolation (29) elektrisch isoliert sind, und dass die Zentrifugalkräfte, welche die mechanischen Verbinder (18b) aufnehmen, über rechtwinklig angeordnete Enden der Verbinder (18b) und über an der Innenseite des Hilfsrims (13) bzw. des erweiterten Hilfsrims (22) angeordnete Isolationsblöcke (25) auf das Hilfsrim (13) bzw. erweiterte Hilfsrim (22) übertragen werden.

8. Rotierende elektrische Maschine nach einem der Ansprüche 1 bis 7, **dadurch gekennzeichnet, dass** die elektrischen Verbinder (18a) zur besseren Kühlung ausserhalb des Hilfsrims (13) bzw. erweiterten Hilfsrims (22) verlaufen.

9. Rotierende elektrische Maschine nach einem der Ansprüche 1 bis 8, **dadurch gekennzeichnet, dass** die elektrischen Verbinder (18a) aus mechanisch weniger belastbaren, aber elektrisch gut leitenden Materialien, insbesondere Kupfer, bestehen.

10. Rotierende elektrische Maschine nach einem der Ansprüche 1 bis 9, **dadurch gekennzeichnet, dass** die elektrischen Verbinder (18a) auf der Innenseite rechtwinklig abgebogen sind, um die auftretenden Zentrifugalkräfte über Isolationsblöcke (25) auf die Innenseite des Hilfsrims (13) bzw. erweiterten Hilfsrims (22) zu übertragen, und dass die elektrischen Verbinder (18a) in axialer Richtung durch aussen liegende Abschlussplatten (24) gesichert sind.

11. Rotierende elektrische Maschine nach einem der Ansprüche 1 bis 10, **dadurch gekennzeichnet, dass** die flexiblen Übergangsstücke (27) U-förmig ausgebildet sind.

12. Rotierende elektrische Maschine nach einem der Ansprüche 1 bis 10, **dadurch gekennzeichnet, dass** die flexiblen Übergangsstücke (27) aus einzelnen Lamellen aufgebaut sind.

13. Rotierende elektrische Maschine nach einem der Ansprüche 1 bis 12, **dadurch gekennzeichnet, dass** die Übergangsstücke (27) aus einem mechanisch nicht stark belastbaren, aber elektrisch gut leitendem Material, insbesondere Kupfer, bestehen.

## Claims

1. Rotating electric machine, in particular a doubly-fed asynchronous machine (10) in the power range between 20 MVA and 500 MVA, which comprises a rotor (11, 11a, 12, 14) that rotates about a machine axis (19), concentrically surrounded by a stator (15, 16), with a rotor plate body (12) and a shaft (11a), said rotor plate body (12) bears a rotor winding that is arranged further outwards, which is connected to slip rings (17) arranged further inwards at the end of the shaft (11a) by the intermediary of connectors (18), wherein the connectors (18) have, to absorb forces arising owing to centrifugal acceleration, mechanical connectors (18b) extending at a right angle in relation to the shaft (11a), which are connected on one hand to a rotor winding head (14) of the rotor winding and bear against on the other hand on an auxiliary rim (13, 22) on rotor plate body (12), **characterised in that**, for the transmission of current per se, additional electrical connectors (18a) are provided, when are electrically connected in parallel with respect to the mechanical connectors (18b), wherein the electrical and mechanical connectors (18a, 18b) are electrically connected by connector terminals (26), and **in that** the connector terminals (26) are electrically connected to flexible transition parts (27), which establish the contact with shaft feed conductors (28) arranged on the shaft (11a) in such a way that current is guided from the slip rings (17) through the shaft (11a) by passing through the shaft feed conductors (28) to the connector terminals (26).

2. Rotating electric machine according to claim 1, **characterised in that** the mechanical connectors (18b) are connected to the rotor winding head (14) of the rotor winding by the intermediary of winding head terminals (20), and that they bear against the auxiliary rim (13) by the intermediary of an extended auxiliary rim (22), which extends the auxiliary rim (13) in an axial direction, preferably is formed of stacked plates and forms a closed ring.

3. Rotating electric machine according to claim 1 or 2, **characterised in that** the mechanical connectors (18b) are at the same axial height as the winding head terminals (20) .

4. Rotating electric machine according to claim 2, **characterised in that** the mechanical connectors (18b) pass in a radial direction through the extended auxiliary rim (22), which is connected to the auxiliary rim (13) by the intermediary of bolts (23), in order to prevent bending tensions in the mechanical connectors (18b).

5. Rotating electric machine according to any of claims 1 to 4, **characterised in that** the mechanical connectors (18b) are formed from an electrically conductive material, that can be subjected to high mechanical loads, in particular steel.

6. Rotating electric machine according to claim 5, **characterised in that** the mechanical connectors (18b) are also electrically connected to the rotor winding head (14) or to the winding head terminals (20).

7. Rotating electric machine according to claim 6, **characterised in that** the mechanical connectors (18b) are electrically insulated by an insulation (29) that surrounds them, and that the centrifugal forces, that the mechanical connectors (18b) absorb, are transmitted on the auxiliary rim (13) or on the extended auxiliary rim (22) by the intermediary of ends arranged at a right angle to the connectors (18b) and by the intermediary of insulation blocks (25) arranged on the arranged on the inner side of the auxiliary rim (13) or of the extended auxiliary rim (22).

8. Rotating electric machine according to any of claims 1 to 7, **characterised in that** the electrical connectors (18a) extend outwards from the auxiliary rim (13) or from the extended auxiliary rim (22) for the purposes of improved cooling.

9. Rotating electric machine according to any of claims 1 to 8, **characterised in that** the electrical connectors (18a) are formed from materials that can be subjected to lower mechanical loads, having however satisfactory electrical conductivity, in particular copper.

10. Rotating electric machine according to any of claims 1 to 9, **characterised in that** the electrical connectors (18a) are folded at a right angle on the inner side in order to transmit the centrifugal forces that appear on the inner side of the auxiliary rim (13) or of the extended auxiliary rim (22) by the intermediary of insulation blocks (25), and **in that** the electrical connectors (18a) are blocked in an axial direction by endplates (24) located outside.

11. Rotating electric machine according to any of claims 1 to 10, **characterised in that** the flexible transition parts (27) are produced in such a way as to have a U shape.

12. Rotating electric machine according to any of claims 1 to 10, **characterised in that** the flexible transition parts (27) are elaborated using individual strips.

13. Rotating electric machine according to any of claims 1 to 12, **characterised in that** the transition parts (27) are formed from a material that cannot be subjected to strong mechanical loads, having however satisfactory electrical conductivity, in particular copper.

## Revendications

1. Machine électrique rotative, en particulier machine asynchrone (10) à double alimentation dans la plage de puissance comprise entre 20 MVA et 500 MVA, laquelle comprend un rotor (11, 11a, 12, 14) tournant autour d'un axe de machine (19), entouré de manière concentrique par un stator (15, 16), avec un corps de tôle de rotor (12) et un arbre (11a), lequel corps de tôle de rotor (12) supporte un enroulement rotorique disposé davantage à l'extérieur, qui est relié à des bagues collectrices (17) disposées davantage à l'intérieur au niveau de l'extrémité de l'arbre (11a) par l'intermédiaire de connecteurs (18), dans laquelle les connecteurs (18) présentent, pour absorber des forces apparaissant du fait de l'accélération centrifuge, des connecteurs mécaniques (18b) s'étendant à angle droit par rapport à l'arbre (11a), lesquels sont reliés d'une part à une tête d'enroulement de rotor (14) de l'enroulement rotorique et prennent appui d'autre part au niveau d'un bord auxiliaire (13, 22) au niveau du corps de tôle de rotor (12),
**caractérisée en ce que** sont prévus, pour la transmission de courant à proprement parler, des connecteurs électriques (18a) supplémentaires, lesquels sont branchés électriquement de manière parallèle par rapport aux connecteurs mécaniques (18b), dans laquelle les connecteurs électriques et mécaniques (18a, 18b) sont reliés électriquement par des bornes de connecteur (26), et que les bornes de connecteur (26) sont reliées électriquement à des pièces de transition (27) flexibles, lesquelles établissent le contact avec des conducteurs d'alimentation d'arbre (28) disposés au niveau de l'arbre (11a) de sorte que du courant est guidé depuis les bagues collectrices (17) à travers l'arbre (11a) en passant par les conducteurs d'alimentation d'arbre (28) vers les bornes de connecteur (26).

2. Machine électrique rotative selon la revendication 1, **caractérisée en ce que** les connecteurs mécaniques (18b) sont reliés à la tête d'enroulement de rotor (14) de l'enroulement rotorique par l'intermédiaire de bornes de tête d'enroulement (20), et qu'ils prennent appui au niveau du bord auxiliaire (13) par l'intermédiaire d'un bord auxiliaire étendu (22), lequel étend le bord auxiliaire (13) dans une direction axiale, de préférence est constitué de tôles empilées et forme une bague fermée.

3. Machine électrique rotative selon la revendication 1 ou 2, **caractérisée en ce que** les connecteurs mécaniques (18b) se trouvent à la même hauteur axiale que les bornes de tête d'enroulement (20).

4. Machine électrique rotative selon la revendication 2, **caractérisée en ce que** les connecteurs mécaniques (18b) traversent dans une direction radiale le bord auxiliaire étendu (22), lequel est relié au bord auxiliaire (13) par l'intermédiaire de boulons(23), pour éviter des tensions de flexion dans les connecteurs mécaniques (18b).

5. Machine électrique rotative selon l'une quelconque des revendications 1 à 4, **caractérisée en ce que** les connecteurs mécaniques (18b) sont constitués d'un matériau électriquement conducteur, pouvant être soumis à des charges mécaniques élevées, en particulier d'un acier.

6. Machine électrique rotative selon la revendication 5, **caractérisée en ce que** les connecteurs mécaniques (18b) sont reliés également électriquement à la tête d'enroulement de rotor (14) ou aux bornes de têtes d'enroulement (20).

7. Machine électrique rotative selon la revendication 6, **caractérisée en ce que** les connecteurs mécaniques (18b) sont isolés électriquement par une isolation (29) les entourant, et que les forces centrifuges, que les connecteurs mécaniques (18b) absorbent, sont transmises sur le bord auxiliaire (13) ou sur le bord auxiliaire étendu (22) par l'intermédiaire d'extrémités disposées à angle droit des connecteurs (18b) et par l'intermédiaire de blocs d'isolation (25) disposés au niveau du côté intérieur du bord auxiliaire (13) ou du bord auxiliaire étendu (22).

8. Machine électrique rotative selon l'une des revendications 1 à 7, **caractérisée en ce que** les connecteurs électriques (18a) s'étendent à l'extérieur du bord auxiliaire (13) ou du bord auxiliaire étendu (22) aux fins du refroidissement amélioré.

9. Machine électrique rotative selon l'une des revendications 1 à 8, **caractérisée en ce que** les connecteurs électriques (18a) sont constitués de matériaux pouvant être soumis à des charges mécaniques inférieures, présentant toutefois une conductivité électrique satisfaisante, en particulier de cuivre.

10. Machine électrique rotative selon l'une quelconque des revendications 1 à 9, **caractérisée en ce que** les connecteurs électriques (18a) sont pliés à angle droit sur le côté intérieur pour transmettre les forces centrifuges apparaissant sur le côté intérieur du bord auxiliaire (13) ou du bord auxiliaire étendu (22) par l'intermédiaire de blocs d'isolation (25), et que les connecteurs électriques (18a) sont bloqués dans une direction axiale par des plaques de terminaison (24) situées à l'extérieur.

11. Machine électrique rotative selon l'une des revendications 1 à 10, **caractérisée en ce que** les pièces de transition (27) flexibles sont réalisées de manière à présenter une forme de U.

12. Machine électrique rotative selon l'une des revendications 1 à 10, **caractérisée en ce que** les pièces de transition (27) flexibles sont élaborées à partir de lamelles individuelles.

13. Machine électrique rotative selon l'une quelconque des revendications 1 à 12, **caractérisée en ce que** les pièces de transition (27) sont constituées d'un matériau ne pouvant pas être soumis à des charges mécaniques puissantes, présentant toutefois une conductivité électrique satisfaisante, en particulier de cuivre.
